# EUROPÄISCHE PATENTSCHRIFT

(11) **EP 0 920 763 B1**
(45) Veröffentlichungstag und Bekanntmachung des Hinweises auf die Patenterteilung: **21.04.2004**
(21) Anmeldenummer: 97941789.6
(22) Anmeldetag: 12.08.1997
(51) Int. Cl.: H04L 25/49, H04L 27/02

(54) **DATENÜBERTRAGUNG MITTELS PULSPOSITIONSMODULATION UND AMPLITUDENMODULATION**
DATA TRANSMISSION BY IMPULSE POSITION MODULATION AND AMPLITUDE MODULATION
TRANSMISSION DE DONNEES PAR MODULATION DE POSITION EN IMPULSION ET MODULATION D'AMPLITUDE

(30) Priorität: 23.08.1996 DE 19634134
(43) Veröffentlichungstag der Anmeldung: 09.06.1999
(73) Patentinhaber: Infineon Technologies AG, 81669 München (DE)
(72) Erfinder: REINER, Robert, D-82008 Unterhaching (DE)
(74) Vertreter: Epping, Hermann, Fischer
(86) Internationale Anmeldenummer: PCT/DE1997/001715
(87) Internationale Veröffentlichungsnummer: WO 1998/008328

(56) Entgegenhaltungen:
- EP-A- 0 595 034
- US-A- 4 571 589
- CANCELLIERI ET AL.: "PPM transmission over a photon counting channel: comparison among various transmission formats" EUROPEAN TRANSACTIONS ON TELECOMMUNICATIONS, Bd. 7, Nr. 4, Juli 1996, Seiten 359-376, XP000592325

## Beschreibung

Es finden zunehmend Übertragungsverfahren Verbreitung, bei denen tragbare Datenträger kontaktlos, d.h. mittels induktiver oder kapazitiver Kopplung oder allgemein über eine drahtlose elektromagnetische Übertragungsstrecke mit einem Terminal Informationen austauschen. Hierbei wird der tragbare Datenträger regelmäßig von dem Terminal ebenfalls kontaktlos mit Energie versorgt, wobei hierzu ein hochfrequentes Trägersignal verwendet wird, dem außerdem einerseits die Daten aufmoduliert werden und das andererseits direkt als Taktsignal in dem Datenträger dient.

Zur Datenübertragung wird das Trägersignal in den meisten Anwendungsfällen lediglich ein- und ausgeschaltet, es findet also eine 100%ige ASK-(Amplitude-Shift-Keying)-Modulation statt. Das Trägersignal wird nun üblicherweise nicht während des gesamten, durch eine "elektrische" Bitdauer definierten Bitzeitfensters, im folgenden Zeitschlitz genannt, ausgetastet bzw. ausgeschaltet oder unverändert gelassen, um eine logische "1" oder "0" zu übertragen, sondern nur während einer deutlich kürzeren Zeit. Die Austastlücke ist beispielsweise ein viertel oder ein drittel des Bitzeitfensters oder Zeitschlitzes lang. Hierdurch ist das Trägersignal zwischen zwei zur Austastung führenden Zuständen lange genug vorhanden, um die Energie- und Taktversorgung sicherzustellen.

Eine mögliche Kodierung ist durch den Miller-Code gegeben, der eine Sonderform für wertdiskrete Signale der aus Hölzler/Holzwart: Pulstechnik Band I Grundlagen Springer-Verlag 1986, Seite 244 bis 246 und 271 bis 277 bekannten Pulsphasenmodulation darstellt. Bei diesem wird eine logische "1" durch eine Austastlücke in der Mitte eines Zeitschlitzes und eine logische "0" durch eine Austastlücke am Anfang eines Zeitschlitzes übertragen, wobei eine nach einer logischen "1" übertragene logische "0" durch keine Austastlücke im Zeitschlitz repräsentiert ist, um zu geringe Abstände zwischen Austastlücken zu vermeiden.

In der EP 0595034A1 ist ein drahtloser Infrarot-Kommunikations-Kanal offenbart, bei dem Daten durch Codeworte pro Symbolperiode codiert werden, die durch Gray-Code-Sequenzen vom Paaren verdoppelter Subcodes und komplementärer Checkbits in benachbarten Zeitschritten einer Symbolperiode gebildet sind. Es wird also in jeder Symbolperiode in zwei benachbarten Zeitschlitzen Information übertragen, die sich nur in einem Bit unterscheiden.

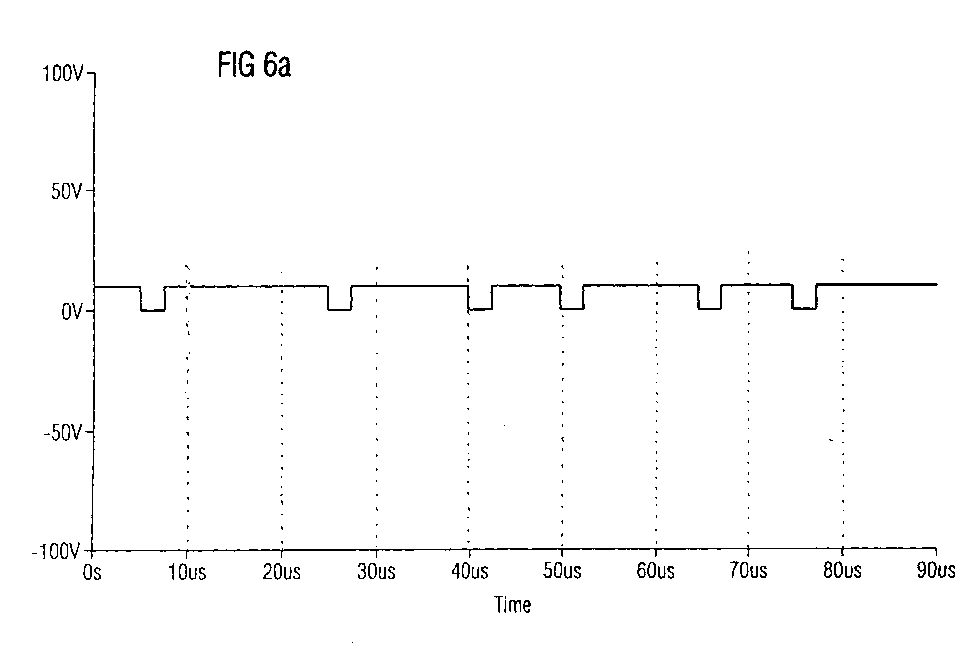

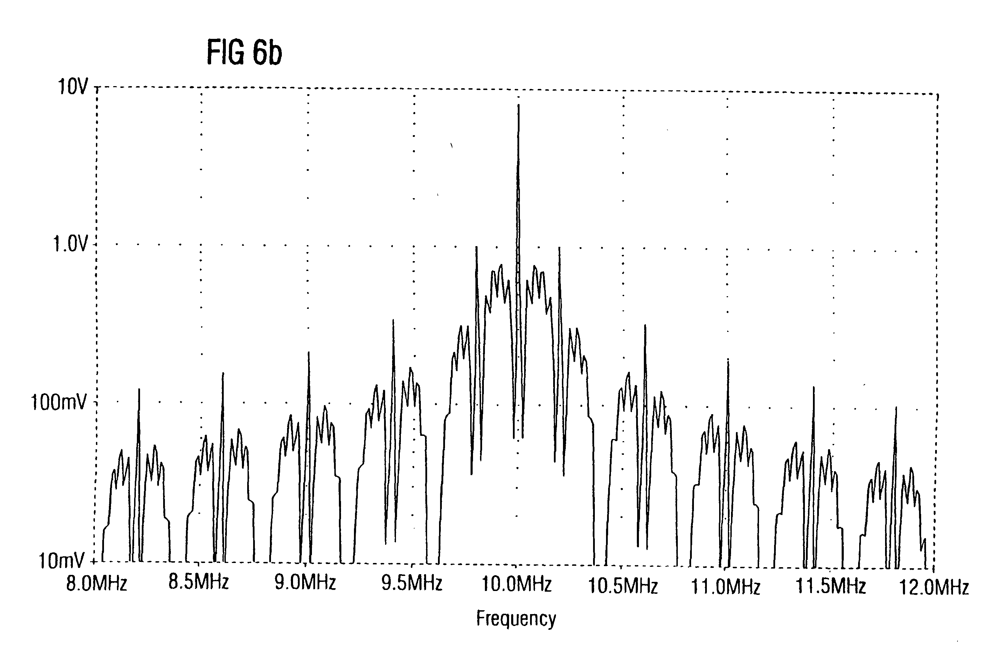

In Figur 6A ist ein Signal im Miller-Code, mit dem ein Trägersignal in der Amplitude moduliert werden soll, dargestellt. Es repräsentiert eine Bitfolge 101000110. Durch senkrechte gepunktete Linien sind die Zeitschlitze angedeutet. Eine Austastlücke hat etwa ein viertel der Dauer eines Zeitschlitzes. In Figur 6B ist das dazugehörende rechnerisch ermittelte Frequenzspektrum dargestellt, wobei das Signal aus Figur 6A einem Trägersignal mit einer Frequenz von 10 MHz aufmoduliert wurde. Wie zu erkennen ist, ergibt sich eine Einhüllende der Seitenbänder mit einer (sinx/x)-Form, wobei sich ein Abstand der maximalen Amplitude der Seitenbänder zum Träger von etwa 18,2 dB ermitteln läßt.

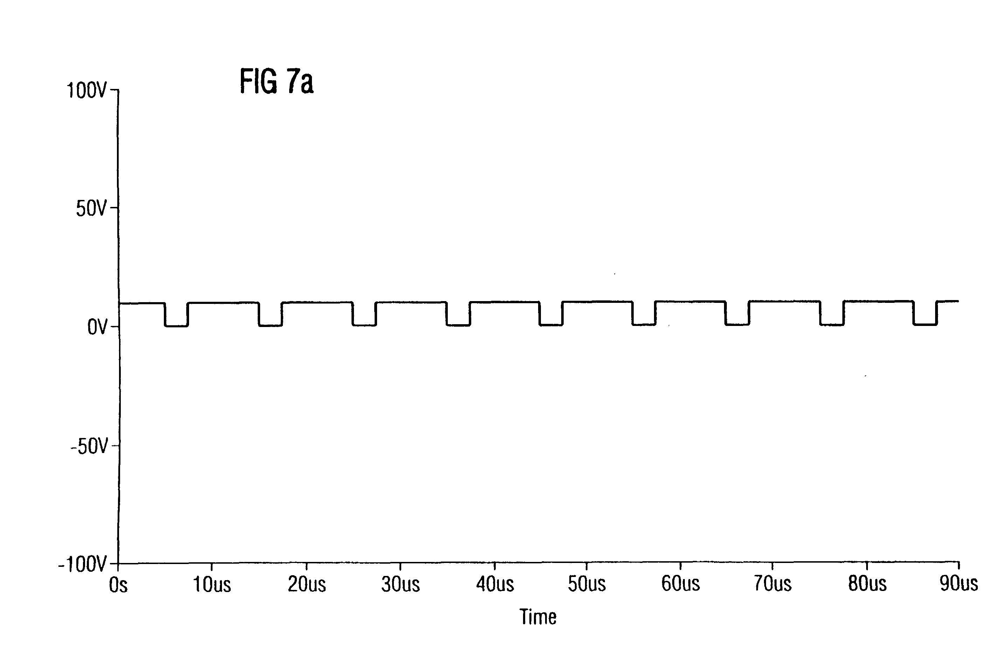

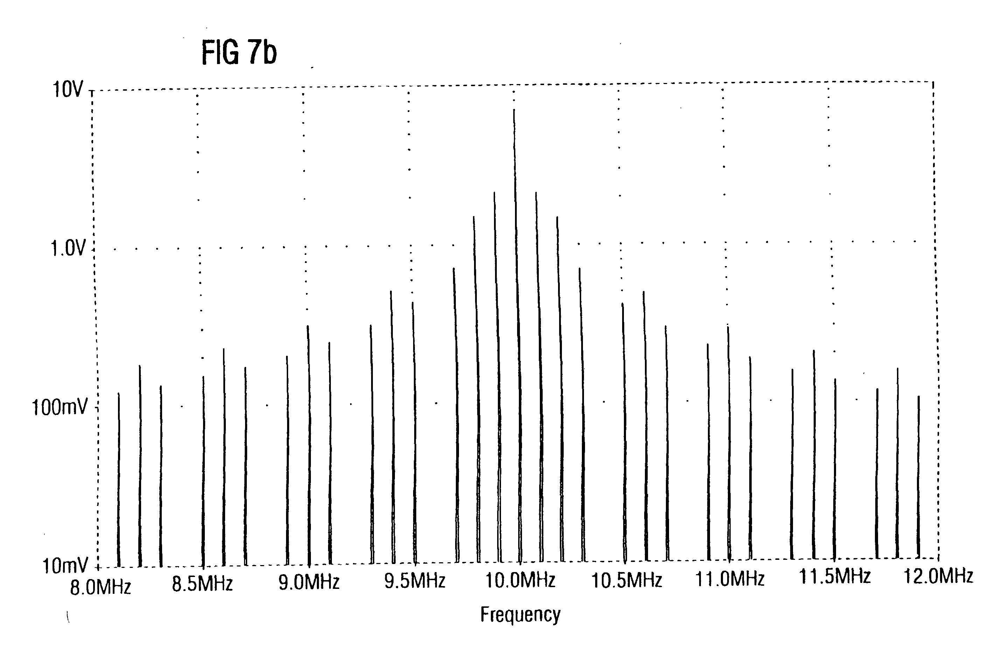

Wenn man den worst-case-Fall einer Modulation mit einer Folge von Einsen 111111111, wie er in Figur 7A dargestellt ist, annimmt, ergibt sich ein Frequenzspektrum, wie es in Figur 7B dargestellt ist. Hier ist der Abstand der Seitenbänder zum Träger nur noch etwa 10,5 dB.

Gemäß den Vorschriften der Funkzulassung und dem diesen zugrundeliegenden Interim-Standard ETS 300330 (ETSI, September 1994) ist für den Träger beispielsweise eine ISM-Frequenz von 13,56 MHz vorgesehen, mit einer Grenze des Pegels von 42 dBµA/m @ 10m. Die Bandbreite für den Träger ist nur +/-7 kHz, so daß das Modulationsspektrum bei der beschriebenen Modulation und Bitkodierung gemäß dem Miller-Code komplett außerhalb auftritt. In dem besagten Standard ist der Pegel außerhalb mit 20 dBµA/m @ 10m begrenzt, also 22 dB unter dem Träger, wobei die Meßbandbreite 10 kHz beträgt. Das beschriebene System mit 100%-ASK-Modulation bei Miller-Codierung kommt, wie oben angegeben, über diese Grenze und kann die Funkzulassung nur bekommen, wenn nicht durchgehend moduliert wird und der Mittelwert herangezogen wird, was nach bisheriger deutscher Vorschrift zulässig ist, nicht jedoch nach der ETS 300 330 und der FCC-Regelung in den USA, die eine Quasi-Peak-Bewertung vorschreiben.

Aus der Schrift "Infrarot-Datenübertragung wird schneller" von Helmuth Lemme aus Elektronik 3/1996, Seiten 38 bis 44 ist es bekannt, bei Infrarotübertragung zur Datenrateerhöhung ebenfalls eine Puls-Positions-Modulation zu verwenden, wobei jedoch jedem Puls zwei Bits zugeordnet sind. Dort dient die Puls-Positions-Modulation jedoch dazu, bei gleicher Anzahl der übertragenen Impulse pro Zeiteinheit eine höhere Datenrate zu erhalten, so daß sich die Amplitude der Seitenbänder des Frequenzspektrums nicht verändert, was dort aber auch nicht von Bedeutung ist. Da dort jedoch die höchst mögliche Impulsrate erstrebt werden soll, sind keine Lücken zwischen den Impulsen, so daß bei einer Aufeinanderfolge der Bitfolgen 11 und 00 das Trägersignal über die Dauer von zwei Impulsen ausgetastet ist. Dies ist bei Infrarotübertragung nicht weiter schlimm, da dort im Empfänger immer ein Oszillator zur Takterzeugung vorhanden ist.

Bei Verfahren, wie sie vorliegender Erfindung zugrunde liegen, bei denen das Trägersignal direkt als Taktsignal wirkt, würde dies jedoch zu einem unzulässig langen Ausfall des Taktsignals führen.

Die Aufgabe vorliegender Erfindung ist es also, ein Verfahren zum Übertragen von Daten zwischen einem Terminal und einem tragbaren Datenträger über eine drahtlose elektromagnetische Übertragungsstrecke anzugeben, bei dem bei annähernd gleicher Bitrate ein größerer Abstand der Seitenbandamplituden zur Trägeramplitude erreicht wird ohne das als Taktsignal fungierende Trägersignal unzulässig lange auszutasten.

Die Erfindung wird durch die Verfahren gemäß der Ansprüche 1 und 4 gelöst. Vorteilhafte Weiterbildungen sind in den Unteransprüchen angegeben.

Beim erfindungsgemäßen Übertragungsverfahren werden pro Umtastungstelle im Trägersignal mindestens zwei Bit, vorzugsweise drei Bit übertragen. Eine Umtaststelle ist dabei eine Stelle, an der die Amplitude des Trägersignals geändert wird. Im Falle einer 100%-ASK-Modulation würde eine Austastung erfolgen, so daß eine Austastlücke vorliegen würde. Welche Wertigkeit diese Bits haben, wird durch die Position der Umtaststelle innerhalb eines Zeitschlitzes definierter Länge bzw. Dauer bestimmt. Bei N Bits pro Umtaststelle müssen somit 2^{N} mögliche Positionen für eine Umtaststelle, im Falle von drei Bits pro Umtaststelle, also acht mögliche Positionen, innerhalb der Dauer eines Zeitschlitzes detektierbar sein. Damit ist zwar ein größerer Aufwand für die Detektion der Umtaststellen im Empfänger erforderlich, es sind aber bei konstanter Bitrate weniger Umtaststellen pro Zeiteinheit nötig, so daß eine geringere Impulsrate und damit eine geringere Amplitude der Seitenbänder eines damit modulierten Trägersignals vorliegt. Abhängig von der gewählten Anzahl von Bits pro Umtaststelle ist es sogar möglich, gleichzeitig die Bitrate zu erhöhen und die Seitenbandamplitude zu verringern.

Soll die Bitrate konstant bleiben, beispielsweise weil ein vorgegebenes Übertragungsprotokoll eingehalten werden muß, so ist es vorteilhaft, wenn der erfindungsgemäße Zeitabschnitt innerhalb eines Zeitschlitzes, in dem keine den zu übertragenden Daten zugeordnete Umtaststelle vorkommt -im folgenden Null-Zeitabschnitt genannt- die gleiche Dauer oder ein ganzzahliges Vielfaches davon wie eine mögliche Position einer Umtaststelle hat. Hierdurch wird die Detektion der Umtaststellen erheblich vereinfacht gegenüber einem Null-Zeitabschnitt beliebiger Dauer.

Die Erfindung wird nachfolgend anhand von Ausführungsbeispielen mit Hilfe von Figuren näher erläutert. Dabei zeigen
- Figuren 1A und 1B: in schematischer Darstellung die zeitlichen Verhältnisse bei einem erfindungsgemäßen Verfahren sowie ein daraus resultierendes 100 %-ASK-moduliertes Trägersignal,
- Figur 2: unterschiedliche Möglichkeiten der Gestaltung eines Zeitschlitzes,
- Figur 3: in schematischer Darstellung ein erfindungsgemäßes Verfahren ohne Null-Zeitabschnitt,
- Figuren 4A und 4B: den zeitlichen Verlauf eines erfindungsgemäß mit einer Bitfolge 001000110 modulierten Trägersignals und das dazugehörende Frequenzspektrum,
- Figuren 5A und 5B: den zeitlichen Verlauf eines erfindungsgemäß mit einer Bitfolge 000000000 modulierten Trägersignals und des dazugehörigen Frequenzspektrums,
- Figuren 6A und 6B: den zeitlichen Verlauf eines Millercodierten Trägersignals mit der Bitfolge 101000110 und das dazugehörige Frequenzspektrum und
- Figuren 7A und 7B: den zeitlichen Verlauf eines Miller codierten Trägersignals mit der Bitfolge 111111111 und das dazugehörige Frequenzspektrum.

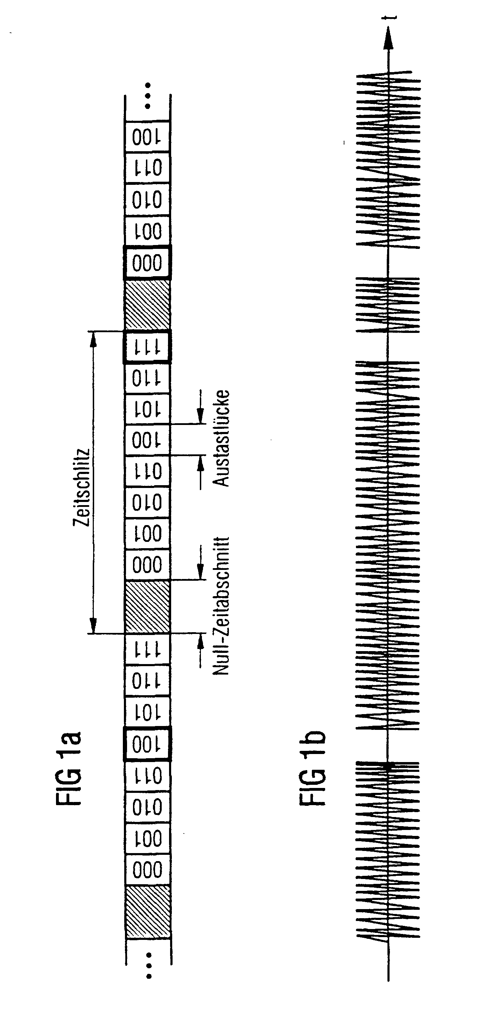

Die Figur 1B zeigt ein erfindungsgemäß 100 %-ASK-moduliertes Trägersignal, das im dargestellten Zeitabschnitt die Bitfolge 100111000 überträgt. Hierzu sind im dargestellten Beispiel lediglich drei Umtaststellen, d.h. Zeitabschnitte, in denen kein Trägersignal vorhanden ist, notwendig, da pro Umtaststelle drei Bits übertragen werden. Welche Wertigkeit diese drei Bits haben, wird durch die Position der Umtaststelle in einem Zeitschlitz bestimmt. In Figur 1A ist hierfür ein Beispiel dargestellt.

Ein Zeitschlitz beginnt mit einem erfindungsgemäßen Null-Zeitabschnitt, d.h. mit einem Zeitabschnitt, in dem keine den zu übertragenden Daten zugeordnete Umtaststelle vorkommt. Der verbleibende Abschnitt eines Zeitschlitzes ist den möglichen Positionen einer Umtaststelle vorbehalten. Für das gewählte Beispiel von drei Bits pro Umtaststelle gibt es 2³=8 mögliche Kombinationen von drei Bits, so daß acht mögliche Positionen einer Umtaststelle vorzusehen sind. In Figur 1A sind den möglichen Positionen Wertigkeiten von Bits in aufsteigender Folge zugeordnet. Es ist aber jede beliebige Zuordnung möglich. So können z.B. Zuordnungen vorteilhaft sein, bei denen sich von einer möglichen Position einer Umtaststelle zur benachbarten nur 1 Bit ändert, weil dann ein zeitlich versetztes Signal wahrscheinlich nur zur Änderung eines Bits führt, was durch einen Parity-Check leicht erkannt werden kann. Eine solche Zuordnung wäre z.B.
|000|001|011|010|110|111|101|100|.

Die Positionen der Umtaststellen in den dargestellten Zeitschlitzen für die zu übertragende Bitfolge 100111000 sind dick umrandet dargestellt.

Wie aus den Figuren 1A und 1B zu erkennen ist, würden bei einer Aufeinanderfolge der letzten möglichen Position im Zeitschlitz -im dargestellten Beispiel für die Bitfolge 111- und der ersten möglichen Position im Zeitschlitz -im dargestellten Beispiel die Bitfolge 000- zwei Umtaststellen hintereinander kommen, wenn kein erfindungsgemäßer Null-Zeitabschnitt vorhanden wäre. Bei dem der Erfindung zugrundeliegenden Übertragungsverfahren, bei dem das Trägersignal direkt als Taktsignal verwendet wird, würde dies zu einem unzulässigen langen Ausfall des Taktes führen. Deshalb ist in erfindungsgemäßer Weise ein Null-Zeitabschnitt vorgesehen.

Prinzipiell wäre es jedoch möglich, im Fall, daß nicht die letzte und die erste mögliche Position aufeinanderfolgen, im Null-Zeitabschnitt eine Steuerzeichen zugeordnete Umtaststelle vorzusehen. Solche Steuerzeichen können jedoch nur zwischen "geeigneten" Datenbitkombinationen auftreten, wenn sichergestellt ist, daß das Trägersignal zwischen jeder Umtaststelle lange genug vorhanden ist.

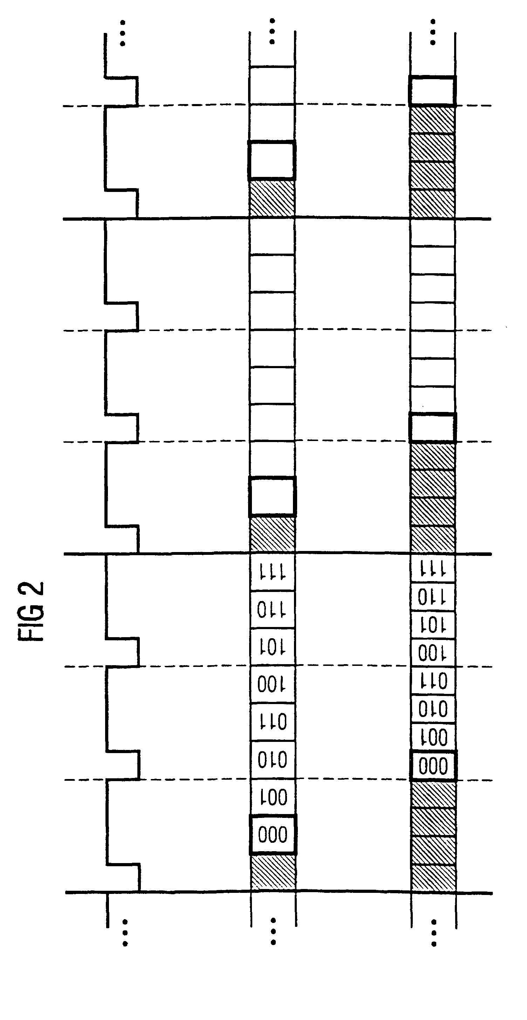

In Figur 2 sind vorteilhafte Ausgestaltungen eines Zeitschlitzes dargestellt. Im oberen Diagramm ist eine zeitliche Folge von durch logische "0"-Zustände repräsentierten "elektrischen" Bits gezeigt. Es wären jedoch auch andere Darstellungen möglich. Die Bitrate soll bei diesem Übertragungsverfahren nicht erhöht werden, so daß bei drei zu übertragenden Bits pro Umtaststelle ein Zeitschlitz die Dauer von 3 "elektrischen" Bits hat.

Bei drei zu übertragenden Bits pro Umtaststelle sind acht mögliche Positionen sowie ein Null-Zeitabschnitt in einem Zeitschlitz vorzusehen. Es ist zur Vereinfachung der Detektionsschaltung im Empfänger sehr vorteilhaft, wenn die Dauer eines Null-Zeitabschnitts gleich der Dauer oder einer ganzzahligen Vielfachen der Dauer einer möglichen Position ist.

Es sei hier angemerkt, daß eine Umtaststelle nicht notwendigerweise gleich lang wie eine mögliche Position sein muß, sondern durchaus kürzer sein kann. Sie muß nur innerhalb der möglichen Position vorkommen, um eine eindeutige Ermittlung der Bitwertigkeiten zu ermöglichen.

Im mittleren Teil der Figur 2 ist der Fall dargestellt, daß ein Null-Zeitabschnitt dieselbe Dauer wie eine mögliche Position hat. Im unteren Teil der Figur 2 ist hingegen der Fall dargestellt, daß ein Null-Zeitabschnitt die vierfache Dauer einer möglichen Position hat und somit der Dauer eines "elektrischen" Bits entspricht. Diese Fälle sind besonders einfach zu detektieren.

In den dargestellten Beispielen kommen die Null-Zeitabschnitte immer am Anfang eines Zeitschlitzes vor. Es ist jedoch genauso gut möglich, sie am Ende eines Zeitschlitzes anzuordnen bzw. vorzusehen.

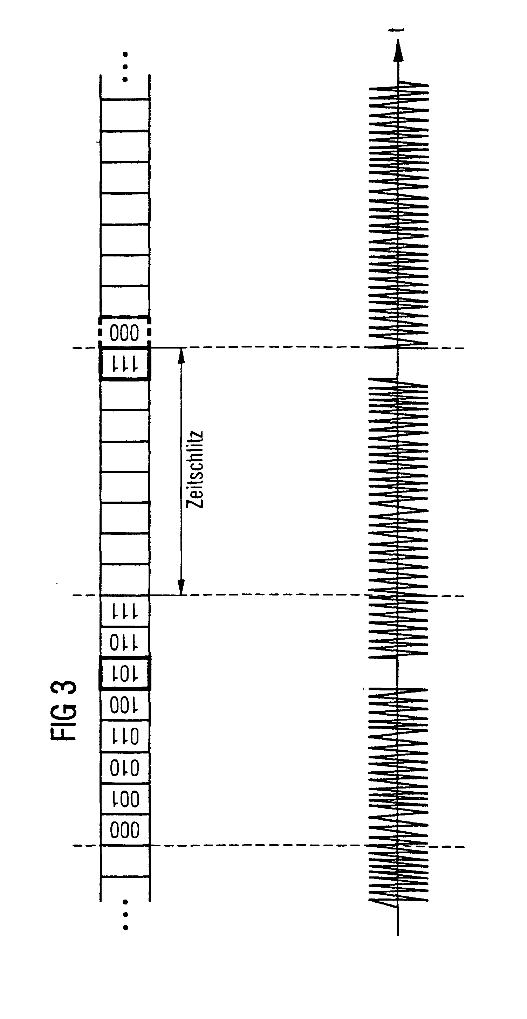

Eine weitere erfindungsgemäße Lösung zur Vermeidung eines unzulässig lange ausgefallenen Taktsignals ist in der Figur 3 dargestellt. Hier ist kein Null-Zeitabschnitt vorgesehen, jedoch wird zur Vermeidung eines unzulässig langen Ausfalls des Taktsignals bei der Aufeinanderfolge einer letzten und einer ersten möglichen Position einer Umtaststelle im Zeitschlitz in diesem Fall statt der Umtaststelle in der ersten möglichen Position keine Umtaststelle im Zeitschlitz übertragen. Hierfür ist es zwar nötig, eine jeweilige Position einer Umtaststelle während des nachfolgenden Zeitschlitzes zwischenzuspeichern, um feststellen zu können, ob bei einer fehlenden Umtaststelle in einem Zeitschlitz im vorangegangenen Zeitschlitz die Umtaststelle an der letzten möglichen Position war, oder ob ein Übertragungsfehler vorliegt. Allerdings kann hier eine Schaltung zur Ermittlung des Null-Zeitabschnitts entfallen.

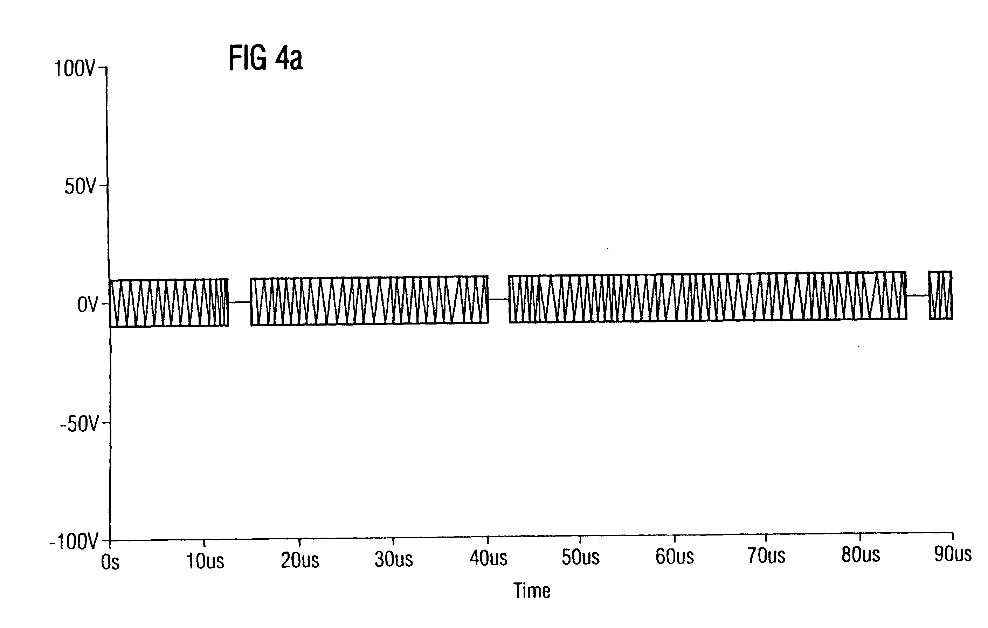

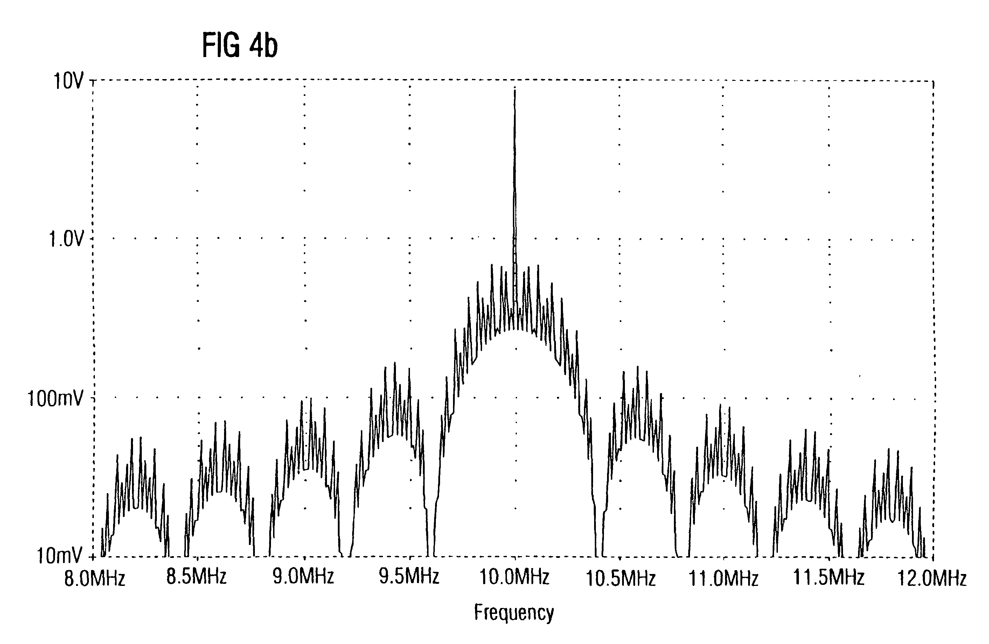

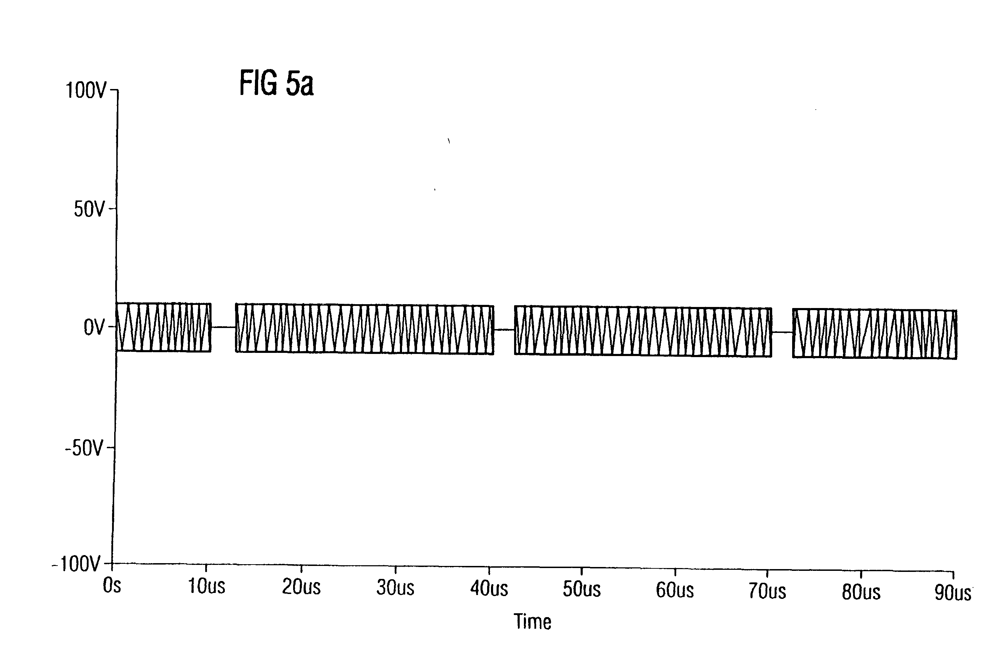

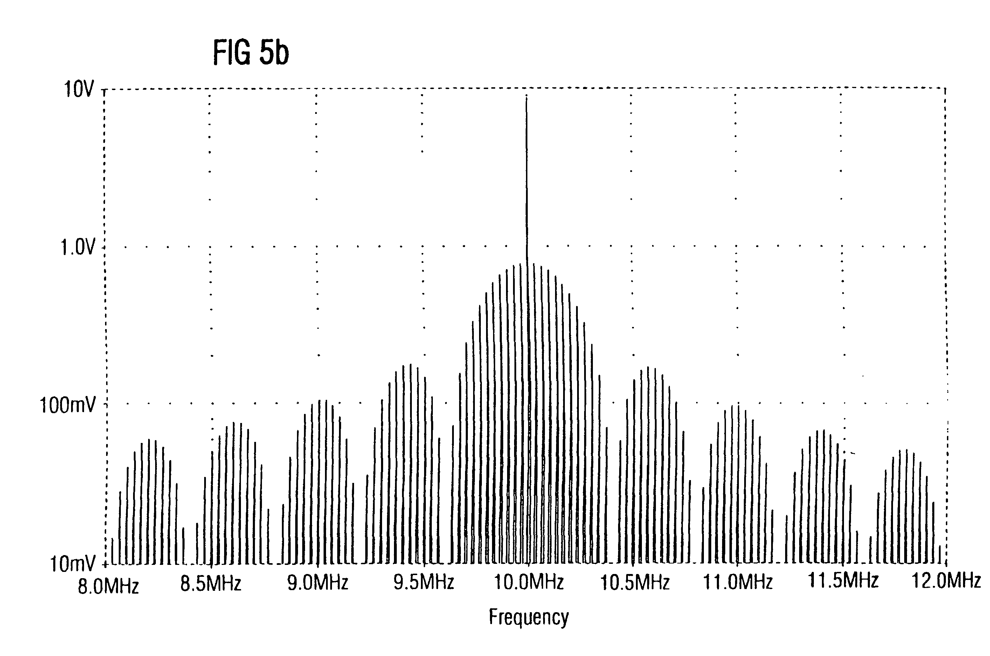

In den Figuren 4A und 4B sowie 5A und 5B sind berechnete Frequenzspektren für bestimmte angenommene Bitfolgen, die mit dem erfindungsgemäßen Verfahren übertragen werden sollen, dargestellt. Es wurde ein Verfahren mit drei Bit pro Umtaststelle und eine Dauer des Null-Zeitabschnitts von vier möglichen Positionen, wie dies im unteren Teil der Figur 2 dargestellt ist, gewählt.

Ein Zeitschlitz dauert somit 30 µs und eine mögliche Position ist 2,5 µs lang, wobei eine Umtaststelle ebenso lang gewählt ist. In der Figur 4A ist eine Bitfolge von 001000110 und in der Figur 5A eine Bitfolge von 000000000, die bezüglich ihres Frequenzspektrums einen worst-case darstellt, gewählt.

Wie den Frequenzspektren zu entnehmen ist, ist bei der quasi beliebigen Bitfolge gemäß Figur 4A ein Abstand der Seitenbänder zum Träger von etwa 21,8 dB gegeben. Selbst im worst-case-Fall der Figur 5B ist immer noch ein Abstand von 20,9 dB vorhanden, so daß die Bedingung der oben erwähnten Funkzulassung deutlich besser als beim Stand der Technik erfüllt ist.

Die Spezifikation für heutige Verfahren zum Übertragen von Daten zwischen einem Terminal und einem tragbaren Datenträger über eine drahtlose elektromagnetische Übertragungsstrecke schreibt eine 100%-ASK-Modulation vor, so daß die erfindungsgemäßen Verfahren hier besonders vorteilhaft einsetzbar sind. Es ist jedoch durchaus möglich, daß sich in Zukunft die Spezifikationen ändern und eine geringere Modulationstiefe zugelassen wird. In diesem Fall würde also kein reines Ein/Ausschalten erfolgen sondern ein Umschalten zwischen zwei Pegeln. Dies würde zu einer weiteren Absenkung der Seitenbänder führen. Das Protokoll des erfindungsgemäßen Verfahrens hat den Vorteil, sowohl gemäß heutiger Spezifikation als auch bei zukünftiger Änderungen dieser Spezzifikation bezüglich der Modulationstiefe ohne Änderungen zu arbeiten.

## Patentansprüche

1. Verfahren zum Übertragen von Daten zwischen einem Terminal und einem tragbaren Datenträger über eine drahtlose elektromagnetische Übertragungsstrecke, wobei ein mittels der Daten ASK-moduliertes Trägersignal im Datenträger als Taktsignal dient und die Wertigkeit eines Datums durch die Position einer Umtaststelle im Trägersignal innerhalb eines Zeitschlitzes bestimmt ist,
der Informationsgehalt einer Umtaststelle dem einer Anzahl von N Bits entspricht, wobei N größer oder gleich 2 ist, und die Wertigkeit dieser N Bits durch die Position der Umtaststelle innerhalb von 2^{N} möglichen Positionen innerhalb eines Zeitschlitzes definiert ist und
am Anfang oder am Ende eines Zeitschlitzes ein Null-Zeitabschnitt ist, in dem keine den zu übertragenden Daten zugeordnete Umtaststelle vorkommt.

2. Verfahren nach Anspruch 1,
**dadurch gekennzeichnet,**
**daß** ein Zeitschlitz eine Dauer von N Bit hat.

3. Verfahren nach einem der Ansprüche 1 oder 2,
**dadurch gekennzeichnet,**
**daß** eine 100%-ASK-Modulation verwendet wird.

4. Verfahren zum Übertragen von Daten zwischen einem Terminal und einem tragbaren Datenträger über eine drahtlose elektromagnetische Übertragungsstrecke, wobei ein mittels der Daten 100%-ASK-moduliertes Trägersignal im Datenträger als Taktsignal dient und die Wertigkeit eines Datums durch die Position einer Umtaststelle im Trägersignal innerhalb eines Zeitschlitzes bestimmt ist,
wobei beim Vorkommen einer Datenwertigkeit, die üblicherweise durch die erste mögliche Position im Zeitschlitz bestimmt ist nach dem Vorkommen einer Datenwertigkeit, die durch die letzte mögliche Position im Zeitschlitz bestimmt ist, die üblicherweise durch die erste mögliche Position bestimmte Datenwertigkeit in diesem Fall dadurch bestimmt ist, daß an keiner möglichen Position im Zeitschlitz eine Umtaststelle vorkommt,
eine Umtaststelle einer Anzahl von N Bits entspricht, wobei N größer oder gleich 2 ist, und die Wertigkeit dieser N Bits durch die Position der Umtaststelle innerhalb von 2^{N} möglichen Positionen innerhalb eines Zeitschlitzes definiert ist.

## Claims

1. Method for transmitting data between a terminal and a portable data carrier over a wire-free electromagnetic transmission link, a carrier signal which is ASK-modulated by means of the data serving as clock signal in the data carrier, and the significance of an item of data being determined by the position within a time slot of a shift keying point in the carrier signal, the information content of a shift keying point corresponding to that of a number of N bits, N being greater than or equal to 2, and the significance of these N bits being defined by the position of the shift keying point within 2^{N} possible positions within a time slot, and at the start or at the end of a time slot there being a zero time period in which no shift keying point assigned to the data to be transmitted occurs.

2. Method according to Claim 1, **characterized in that** a time slot has a duration of N bits.

3. Method according to one of Claims 1 and 2 **characterized in that** a 100% ASK modulation is used.

4. Method for transmitting data between a terminal and a portable data carrier via a wire-free electromagnetic transmission link, a carrier signal which is 100% ASK-modulated by means of the data serving as clock signal in the data carrier, and the significance of an item of data being determined by the position of a shift keying point in the carrier signal within a time slot, in which case, when a data significance which is usually determined by the first possible position in the time slot, occurs after the occurrence of a data significance which is determined by the last possible position in the time slot, the data significance which is usually determined by the first possible position is determined in this case by the fact that a shift keying point does not occur at any possible position in the time slot, a shift keying point corresponding to a number of N bits, N being greater than or equal to 2, and the significance of these N bits being defined by the position of the shift keying point within 2^{N} possible positions within a time slot.

## Revendications

1. Procédé de transmission de données entre un terminal et un support de données transportable par une section de transmission électromagnétique sans fil, dans lequel
une porteuse modulée ASK par les données sert de signal d'horloge dans le support de données et le poids d'une donnée est déterminé par la position d'un emplacement de modulation dans la porteuse à l'intérieur d'une fente temporelle,
le contenu informationnel d'un emplacement de modulation correspond à un nombre de N bits où N est supérieur ou égal à 2, et le poids de ces N bits est défini par la position de l'emplacement de modulation dans 2^{N} positions possibles à l'intérieur d'une fente temporelle et
un intervalle de temps nul, pendant lequel il n'y a aucun emplacement de modulation associé aux données à transmettre, est situé au début ou à la fin d'une fente temporelle.

2. Procédé selon la revendication 1, **caractérisé en ce qu'**une fente temporelle a une durée de N bits.

3. Procédé selon l'une des revendications 1 ou 2, **caractérisé en ce que** l'on utilise une modulation ASK de 100%.

4. Procédé de transmission de données entre un terminal et un support de données transportable par une section de transmission électromagnétique sans fil, dans lequel
une porteuse modulée ASK à 100% par les données sert de signal d'horloge dans le support de données et le poids d'une donnée est déterminé par la position d'un emplacement de modulation dans la porteuse à l'intérieur d'une fente temporelle,
lorsqu'un poids de données, qui est déterminé habituellement par la première position possible dans la fente temporelle, se trouve après un poids de données qui est déterminé par le dernier poids possible dans la fente temporelle, le poids des données est déterminé dans ce cas par la première position possible en raison du fait qu'un emplacement de modulation ne se trouve en aucune position possible dans la fente temporelle,
un emplacement de modulation correspond à un nombre de N bits, où N est supérieur ou égal à 2, et le poids de ces N bits est défini par la position de l'emplacement de modulation dans 2^{N} positions possibles à l'intérieur d'une fente temporelle.
